Europäisches Patentamt

European Patent Office

Office européen des brevets

(11) Publication number: **0 265 016**
**A2**

## (12) EUROPEAN PATENT APPLICATION

(21) Application number: 87201999.7

(22) Date of filing: 19.10.87

(51) Int. Cl.4: **H01F 1/08** , H01F 41/02 , H02K 37/12 , B22F 3/02

(30) Priority: **20.10.86 GB 8625099**

(43) Date of publication of application:
**27.04.88 Bulletin 88/17**

(84) Designated Contracting States:
**AT BE CH DE ES FR GB IT LI NL SE**

(71) Applicant: PHILIPS ELECTRONIC AND
ASSOCIATED INDUSTRIES LIMITED
Arundel Great Court 8 Arundel Street
London WC2R 3DT(GB)

(84) GB

(71) Applicant: N.V. Philips' Gloeilampenfabrieken
Groenewoudseweg 1
NL-5621 BA Eindhoven(NL)

(84) BE CH DE ES FR IT LI NL SE AT

(72) Inventor: Rozendaal, Ewoud c/o MULLARD
MAGNETIC COMPONENTS
Balmoral Drive
Crossens Southport Merseyside PR9
8PZ(GB)

(74) Representative: Collett, Albert Raymond et al
PHILIPS ELECTRONICS Patents and Trade
Marks Department Centre Point New Oxford
Street
London WC1A 1QJ(GB)

(54) Method and apparatus for the manufacture of rare earth transition metal alloy magnets.

(57) A rare earth transition metal magnet, such as SmCo5, is pressed from alloy powder in an intense aligning magnetic field before sintering. This involves adapting a standard press to accommodate an electromagnet which latter makes it impractical to form a multipolar aligned magnet in one piece.

In the improvement a comminuted alloy of neodymium iron and boron is pressed in a chamber (31) in the less intense aligning magnetic field generated by permanent magnets (34), e.g. of SmCo5 or NdFeB. The pressing chamber assembly (32, 33, 34, 35) is compact and can be used on an unmodified press (3, 5, 36, 37) to provide a multipolar aligned NdFeB magnet having a remanence greater than that of a SmCo5 magnet.

Fig.4.

Fig.5.

## METHOD AND APPARATUS FOR THE MANUFACTURE OF RARE EARTH TRANSITION METAL ALLOY MAGNETS

The invention relates to a method of manufacturing a magnet from a magnetic material the main phase of which comprises an intermetallic compound of the rare earth transition metal type which also includes boron, comprising the steps of:-

(a) forming an alloy of the constituent rare earth and transition metals with the addition of boron,

(b) comminuting the alloy to an average particle size in the range 0.3 to 80 um and preferably less than about 10um,

(c) forming a magnet body by pressing the resulting powder in a pressing tool while the powder is situated in a magnetic aligning field,

(d) sintering the magnet body at a temperature in the range of about 800 to 1200 degrees C, followed by slow cooling, and

(e) after, if necessary, machining to shape, magnetising the magnet body.

The manufacture of such magnets are described in European Patent Application No. 101552.

The invention further relates to apparatus for manufacturing said magnets, and to magnets manufactured by the method and apparatus.

Magnetic materials based on intermetallic compounds of certain rare earth metals with transition metals may be formed into permanent magnets having coercive fields of considerable magnitude, namely of several hundred kA/m. For this purpose the constituent materials are alloyed in an inert atmosphere or in vacuo. The alloy is then comminuted into particles whose average size lies in the range 0.3 to 80um and is preferably less than about 10um, which are aligned in a magnetic field while being formed into a magnet body by compacting under a pressure of about 10kN/cm$^2$. The alignment of the particles is fixed and the particles bonded together by sintering in an inert atmosphere or in vacuo at a temperature in the range of approximately 800 to 1200 degrees C.

Initially, samarium cobalt (SmCo5) magnets were produced, but were expensive owing to the scarcity of samarium. Recently, however, new types of rare earth transition metal magnets have been devised using the more abundant rare earth metal neodymium in combination with iron and a small proportion of boron. A typical alloy contains a major hard magnetic phrase as $Nd_2Fe_{14}B$, and is of the form $Nd_{15}Fe_{77}B_8$, although such magnet alloys of slightly varying compositions will be referred to herein generally by NdFeB. One form of NdFeB magnet has been manufactured with a coercivity of approximately 800kA/m (10kOe) and an energy product (B*H) of approximately 240kJ/m3 (30 MGsOe).

It should be noted, however, that other rare earth metals, such as praseodymium, which are less abundant than neodymium, are sometimes substituted for part of the Nd content of such alloys, as is cobalt for part of the iron content. However the designation NdFeB will be used herein generally to refer to commercially useful neodymium iron boron magnet alloys whether partially substituted or not.

The formation of a magnet body from a powder mass is carried out in a suitably shaped pressing chamber of a press, which forms part of the magnetic circuit of associated electromagnets which are arranged to provide the necessary magnetic alignment field. This entails the provision of specially constructed presses and major alterations may have to be made to the presses when different forms of magnet body or of magnetic alignment patterns, are to be made.

The use of electromagnets to supply the necessary alignment field also means that it is impractical to form a magnet body with a complex multipolar alignment pattern in one piece and it has hitherto been necessary in such a case, to form the magnet body as a plurality of parts each with a simple alignment pattern and to assemble the parts at a later stage to form the desired magnet body. An example of such a magnet body would be a multipolar rotor for a stepping motor. Thus such a rotor can be formed as a cylinder using a uniform radial alignment field using an electromagnet arrangement. However when a rotor of this kind is subsequently magnetised with a distribution of alternate poles, it is found that the location of the poles tends to be insufficiently well defined. It is therefore desirable to employ an alignment field pattern which closely follows the field pattern produced by subsequent magnetisation using alternate poles, and this can only be carried out in a press using electromagnets by forming the rotor out of arcuate sections containing only about two poles at a time and subsequently assembling the sections together. This is time consuming, expensive and unsatisfactory.

It is an object of the invention to provide an improved method and apparatus for manufacturing magnetically prealigned magnet bodies of the kind referred to.

According to the invention there is provided a method of manufacturing a magnet from a magnetic material the main phase of which comprises an intermetallic compound of the rare earth transition metal type which also includes boron, comprising the steps of:-

(a) forming an alloy of the constituent rare earth and transition metals with the addition of boron,

(b) comminuting the alloy to an average particle size in the range 0.3 to 80um and preferably less than about 10um,

(c) forming a magnet body by pressing the resulting powder in a pressing tool while the powder is situated in a magnetic aligning field,

(d) sintering the magnet body at a temperature in the range of about 800 to 1200 degrees C, followed by slow cooling, and

(e) after, if necessary, machining to shape, magnetising the magnet body, characterised in that in step (c) the magnetic alignment field is provided by a magnetic circuit whose magnetomotive force is generated by permanent magnet means including at least one high energy permanent magnet.

In further accord with the invention there is provided apparatus for carrying out the said method, including a pressing tool having a pressing chamber in which the magnetic body is pressed and having magnetic circuit means for applying an aligning magnetic field to the alloy powder while it is being pressed, characterised in that the source of magnetomotive force employed in the magnetic circuit means to generate the aligning magnetic field comprises permanent magnet means including at least one high energy permanent magnet.

It is known from US Patent No. 4444550 to magnetise a barium ferrite plastic magnet during injection moulding by means of high energy rare earth permanent magnets such as samarium cobalt (SmCo5), which are incorporated within the mould assembly and protected by a non-magnetic pressure barrier of, for example, titanium. However, the magnetising field strength obtainable by such means is limited to about 350kA/m using a samarium cobalt magnet.

The present invention is not concerned with magnetising the finished magnet but with an intermediate step during the manufacture of sintered NdFeB magnets in which the powdered alloy is subjected to an alignment field while a magnet body is being formed by pressing the loose powder in a pressing chamber.

In order to realise the maximum attainable remanence from a sintered powder magnet when it is magnetised towards the end of its manufacture, a suitable aligning magnetic field strength must be applied during the compaction process in the press. With magnet powders employed hitherto, the saturation remanence of the sintered magnet increases relatively slowly with the field strength of the applied aligning field and a performance of about 90% of the attainable value can only be attained at high field strengths necessitating the use of electromagnet assemblies of correspondingly high performance. One example relating to pressing a magnet body in the manufacture of a samarium cobalt magnet (SmCo5) requires respective aligning field intensities for a given SmCo5 powder, in excess of about 800kA/m and 1000kA/m in order to provide a finished magnet having respectively 90% and 95% of the maximum realisable remanence of about 0.89T.

The invention is based on the realisation that in the case of certain rare earth transition metal type alloys, such as $Nd_2Fe_{14}B$, which are referred to herein as NdFeB alloys, as much as 95% of the maximum attainable remanence can be achieved by using a relatively low aligning field intensity of 400kA/m or less, and that such a field intensity can be readily attained by the use of commercially available high energy permanent magnets i.e. magnets having, for example, a maximum BH product on the demagnetisation curve, $(BH)_{max}$, of not less than 32kJ/m3 and preferably not less than 80kJ/m3, and a flux density Bd corresponding to $(BH)_{max}$ of not less than 300mT, such as can be formed by some cobalt alloys or by suitable rare earth sintered magnets employing samarium cobalt or NdFeB alloys arranged in a reasonably efficient magnetic circuit of soft iron so as to include the pressing chamber which is to contain the NdFeB alloy powder from which the magnet body is to be pressed prior to being sintered.

It has further been found that the aligning magnetic field intensity required to attain a given fraction of the maximum realisable remanence, depends on the direction of the aligning field relative to the direction of the applied pressing force. Thus in one example of an NdFeB alloy, when the alignment magnetic field was directed parallel to the applied pressure, respective alignment field strengths of 280kA/m and of 90kA/m enabled about 95% and 90% of the maximum remanence to be attained, while for a similar result to be achieved when a perpendicular relationship exists between the directions of the alignment field and the applied pressure, the respective alignment field strengths were 360kA/m and 180kA/m.

It should also be noted that the maximum attainable remanence for a typical SmCo5 magnet is about 0.89T while the corresponding maxima for the above mentioned example of NdFeB alloy was 1.09T and 1.18T for the parallel and perpendicular relative orientations of the alignment field and the pressing force respectively. From this it will be seen in the case of the NdFeB alloy that even the application of a smaller alignment field than is required to achieve 90% of the realisable remanence of e.g. 1.18T, can provide a sintered magnet having a remanence greater than 0.9T which is greater than the maximum realisable remanence when using a SmCo5 alloy and an alignment field of very high intensity. A method and apparatus in accordance with the invention provides the advantage that the aligning permanent magnets can be incorporated into a compact pressing chamber assembly which can be employed in a standard pressing machine thus avoiding the expense of constructing or adapting a press to accommodate suitable electromagnets. A particular advantage is that complex alignment patterns of preferred magnetisation may be introduced into magnet bodies in a single step process using a simple and compact aligning assembly without the need to manufacture the finished magnet body from a number of individually aligned segments. For example multipole rotor magnets for generators or for motors, notably for stepper motors, can be formed which show well defined pole positions after magnetisation.

Embodiments and examples in accordance with the invention will now be described by way of example, with reference to the accompanying drawings, of which:-

Figure 1 illustrates in vertical section, the pressing chamber and magnetic circuit of the pressing tool employed in accordance with the invention,

Figure 2 is a horizontal section of the chamber shown in Figure 1,

Figure 3 is a graph of saturation remanence v. alignment field strength for certain magnet alloys,

Figure 4 illustrates in vertical section, a further arrangement of the pressing chamber and magnetic circuit in accordance with the invention,

Figure 5 is a horizontal section of the chamber of Figure 4,

Figure 6 illustrates a further form of pressing tool employed in accordance with the invention, and

Figure 7 diagrammatically illustrates an embodiment with alignment parallel to the direction of pressing.

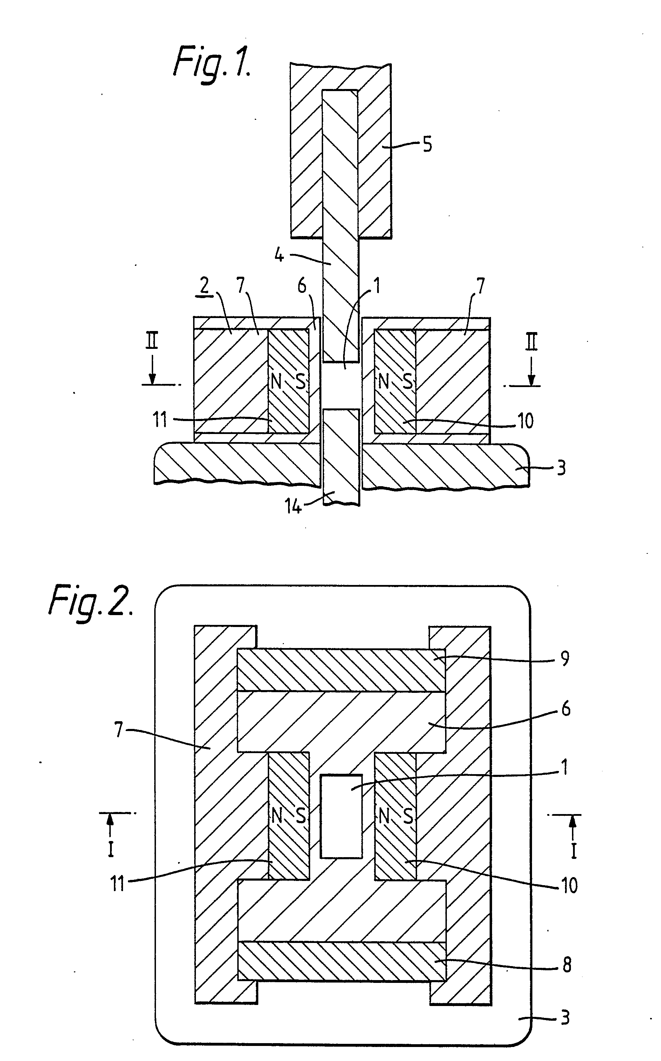

One form of apparatus in accordance with the invention is illustrated by the detail of the pressing tool of an otherwise conventional press, shown in vertical and horizontal section in Figures 1 and 2 respectively and which depict the pressing chamber and associated magnetic circuit assembly employed in carrying out the method in accordance with the invention. The press itself can take any convenient form and can be a mechanical press or a hydraulic press.

In an example of the said method, the high purity alloy powder of average particle size 5um, resulting from milling and grinding in an inert atmosphere or in vacuo, a casting made of the NdFeB composition, for example Nd15Fe77B8, to be used as magnet material, is placed in the pressing chamber 1 of the die assembly 2 of the pressing tool, which is located on the stationary plattern 3 of the press (not shown). A diehead 4 carried on the outer end of an upper plunger 5 is then used to compress the powder in the chamber 1 to a pressure in the range 5 to 30kN/cm2 against a counterhead 14 also actuated by the press via a lower plunger (not shown).

The pressing chamber is formed in a strong non-magnetic block 6 made of a form of tungsten carbide manufactured under the Trade Mark "STELLITE", and a magnetic circuit is set up about the chamber 1 via soft iron pieces 7, 8 and 9. Alternative non-magnetic materials which can be used to contain the powder are stainless steel, brass, or in the form of a thin sheet construction, titanium. In accordance with the invention the magnetomotive force required to provide the desired alignment field, in this case perpendicular to the pressing direction, in the alloy powder in the chamber 1, is supplied by high energy permanent magnets 10 and 11 formed in the present example of sintered NdFeB although other forms of high energy permanent magnets such as samarium colbalt magnets can be employed. A high energy permanent magnet 10, 11, for use in the described apparatus, would preferably be characterised by a value of not less than 300mT for the fluxdensity Bd which corresponds to the maximum value of the BH product, $(BH)_{max}$, on the demagnetisation curve and which value would be preferably not less than 32kJ/m3 and more satisfactorily not less than 80kJ/m3.

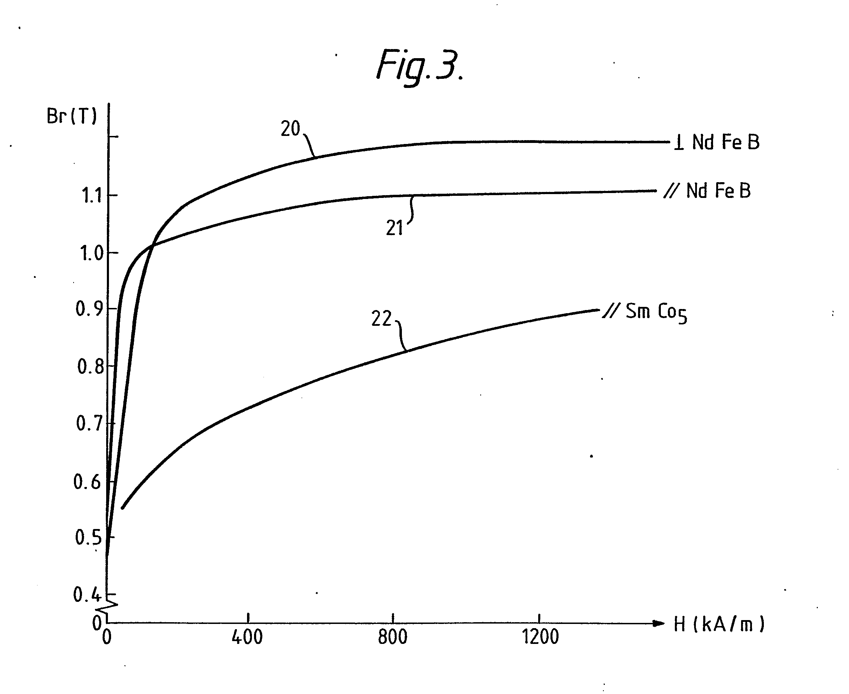

Figure 3 is a graph indicating the relationships between the remanence Br after saturation of the sintered and annealed magnet bodies and the magnitude of the alignment field employed during the process of pressing the powder to form the magnet body before sintering. The curves 20 and 21 relate to magnet bodies formed of NdFeB and the curve 22 relates to a magnet body formed of SmCo5. The curve 20 relates to the situation illustrated in Figures 1 and 2 in which the alignment field is perpendicular to the pressing direction while the curve 21 relates to an alignment field directed parallel to the pressing direction. The curve 20 tends to an ultimate value of about 1.18T while the curve 21 tends to an ultimate value of about 1.09T for high values of the alignment field.

It will be apparent from Figure 3, that the saturation remanence Br of either form of NdFeB magnet body rises very rapidly with an increase in the aligning field. Thus both forms of NdFeB magnets can be seen to reach 90% of their maximum remanence for an alignment field of less than 200kA/m, which can readily be provided in a magnetic circuit including the pressing chamber by a high energy permanent magnet such as a chrome alloy or a rare earth transition metal magnet such as SmCO5 or NdFeB. In the case of the perpendicular orientation indicated by the curve 20 an alignment field of about 180kA/m provides a (90%) saturation remanence of about 1.06T, while the parallel orientation indicated by the curve 21 requires an alignment field strength of only about 90kA/m to provide a saturation remanence of about 0.98T.

If it were desired to attain 95% of the ultimate saturation remanence then in the case of the perpendicular orientation an alignment field of about 360kA/m provides a remanence of about 1.12T, while the parallel orientation requires an alignment field of about 280kA/m providing a remanence of about 1.03T. Such values of alignment field can be readily attained in a sufficiently efficient magnetic circuit using sintered NdFeB magnets to supply the magnetomotive force, thus enabling a compact moulding chamber assembly to be constructed which can be used with a standard hydraulic or mechanical press.

It will be apparent that the corresponding curve 22 for a samarium cobalt magnet and for which the alignment field is directed parallel to the pressing direction, rises very much more slowly and to make reasonable use of the properties of a SmCo5 magnet alloy, intense alignment fields are required, namely about 800kA/m for 90% and about 1050kA/m for 95% of the maximum attainable remanence, and such values of field intensity cannot be achieved by present day permanent magnet material. Furthermore, the remanence values thereby attained are only 0.8T and 0.85T respectively.

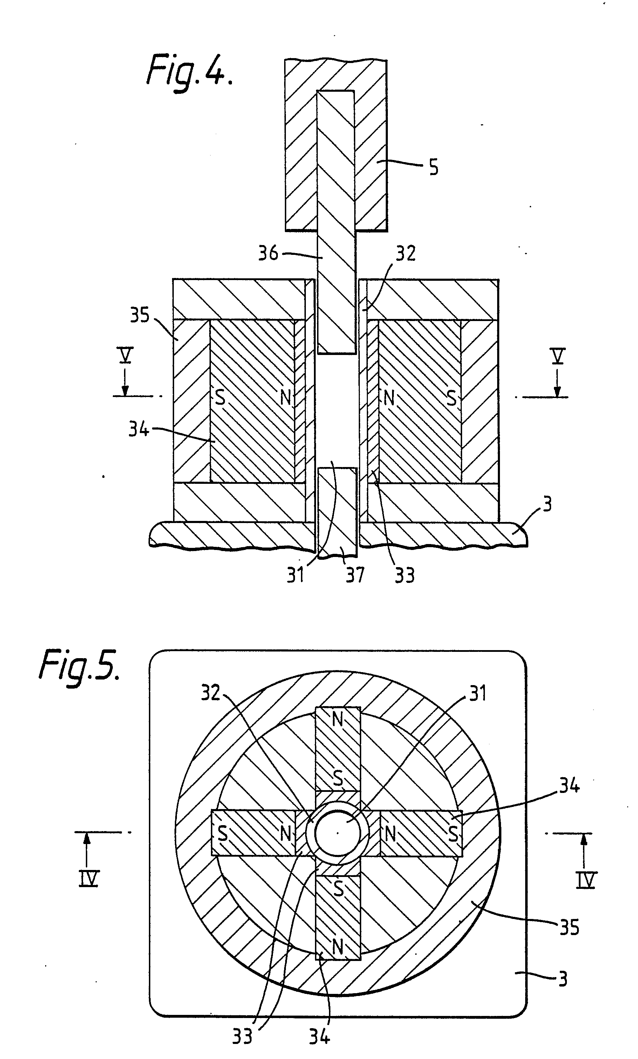

Figures 4 and 5 illustrate a further form of apparatus in accordance with the invention for manufacturing a rotor in the form of a four pole magnet. The pressing chamber 31 is formed within a non-magnetic cylindrical sleeve 32 suitably of stainless steel, surrounded by four mild steel pole pieces 33 each abutting one end of a corresponding NdFeB magnet bar 34 whose other end makes magnetic contact with a surrounding cylinder of mild steel 35 which completes the magnetic circuit. The magnets 34 are arranged alternately with opposite poles applied to the pole pieces 33. The remainder of the pressing chamber assembly is formed of non-magnetic material to contain the pressure exerted by the press. A non-magnetic die-head 36 carried on the outer end of the upper plunger 5 is employed to compress the powder against a counterhead 37 carried on a lower plunger (not shown), as in the case of Figures 1 and 2, although in this case both are of circular cross section.

The apparatus illustrated by Figures 4 and 5 can readily be modified so that a larger number of pole pairs can be accommodated round the periphery of the magnet body formed in the pressing chamber 31 by providing further alternately reversed adjacent pairs of magnets 34 and associated pole pieces 33 around the cylindrical pressing chamber 32.

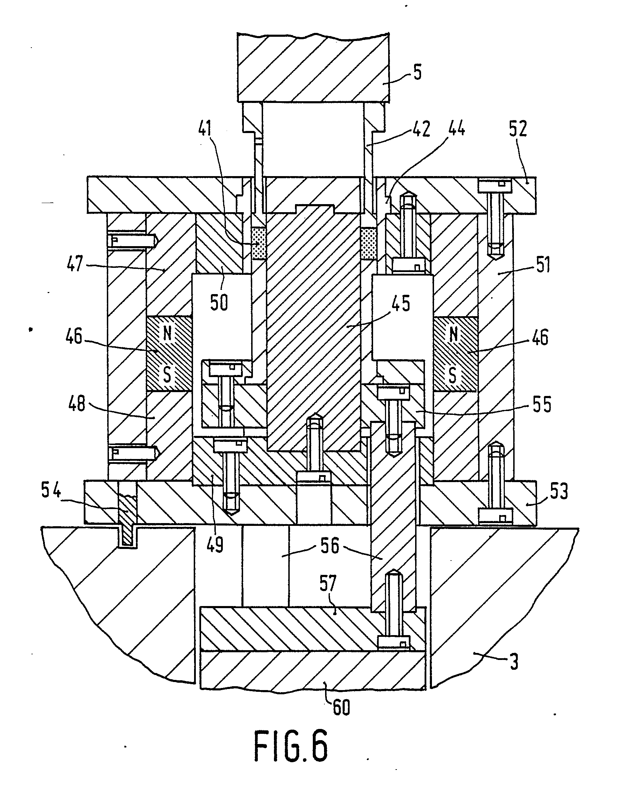

Figure 6 illustrates a further form of apparatus in accordance with the invention for manufacturing an annular Nd-Fe-B magnet in which a uniform radial alignment field is employed. Such a magnet can be subsequently magnetised with a large number of alternate peripheral poles to form the rotor of a synchronous clock motor.

In the apparatus of Figure 6 an annular pressing chamber 41 is formed between the end faces of a cylindrical non-magnetic upper punch 42 and a cylindrical non-magnetic lower punch 43 and between the outer cylindrical non-magnetic insert 44 and an inner ferromagnetic core 45, suitable of soft iron, whose outer surface in the vicinity of the pressing chamber, can also be provided with a non-magnetic insert (not shown) if desired. A radial magnetic alignment field is generated in the pressing chamber 41 by a high-energy permanent magnet insert 46 formed either by an annular Nd-Fe-B magnet or an assembly of Nd-Fe-B magnets arranged side by side, and is applied to the pressing chamber 41 via a magnetic circuit formed by soft iron members 47, 48, 49, an inner pole formed by the ferromagnetic core 45 and an annular outer pole piece 50 also of soft iron. The pressing chamber and the associated magnetic circuit are contained and located within a non-magnetic casing formed by a cylindrical outer wall 51 and similar upper and lower end walls 52, 53, suitably formed of non-ferromagnetic stainless steel, tungsten carbide e.g. "STELLITE" or brass. The casing is placed on the stationary platten 3 of a double-acting press (not shown) and is located thereon by one or more locating pins 54.

The lower punch (diehead) 43 is arranged to be freely moveable in a vertical direction along the inner core 45, and is mounted on an annular support 55 attached by three support columns 56 arranged to pass freely through corresponding apertures in the members 49 and 53, to a base 57 which rests on the lower plunger 60 of the press. The upper punch (diehead) 42 is urged downwardly by the upper plunger 5 in order to compress powder present in the pressing chamber 41.

At the start of a pressing cycle the pressing chamber will be empty, the upper plunger 5 will be raised and the upper punch 42 will be removed. The lower punch 43 is positioned by means of the lower plunger so that the volume of the pressing chamber 41 below the top surface of the upper end wall 52 is that required to accommodate the correct charge of loose, comminuted Nd-Fe-B powder. To start the sequence, Nd-Fe-B powder is loaded into the chamber 41 and the top levelled off to the upper surface of the end wall 52 with a straight edge. The end of the inner ferromagnetic core 45 is provided with a non-magnetic end cap 58 so that surplus magnetic particles can be freely removed.

The upper punch 42 is then placed in position as the lower punch is retracted slightly by lowering the lower plunger 60 to the position shown in Figure 6. The upper plunger 5 is then caused to descend onto the anvil top of the upper punch 42 and the press force increased so that the powder in the chamber 41 is compressed to a pressure in the range 5 to 30 kN/cm2.

When pressing is complete the press force is released and the lower plunger 60 is raised so that the upper surface of the lower plunger 43 is flush with the upper surface of the end wall 52 and the of the end cap 58. The upper plunger 5 is further raised and the upper punch 42 is lifted off thus enabling the pressed and aligned annular magnet body to be removed for sintering and further processing. The upper punch 42 may be attached at its upper, anvil end to the end surface of the upper plunger 5 so that it is lifted automatically from the pressed magnet body without the need for manual intervention.

In a practical example of the apparatus of Figure 6, the radial alignment field maintained in the pressing chamber by the Nd-Fe-B magnets 46 was in the range 280 kA/m to 320 kA/m.

Although the embodiments of Figures 1 and 2, of Figures 4 and 5, and of Figure 6 all show the alignment magnetic field to be perpendicular to the direction of the applied compression, it is also possible to arrange the pressing chamber assembly, the magnetic circuit and the permanent magnets so as to provide an alignment magnetic field which is parallel to the pressing direction. This entails the provision of a magnetic field path via the end surfaces of the pressing dies which would have to include at least a magnetic insert of mild steel or soft iron. Furthermore, a non-magnetic powder retaining cap of, for example titanium, would probably be desirable to close the top of the pressing chamber after a charge of NdFeB powder had been introduced and before lowering the upper die to complete the magnetic circuit, to prevent some powder being attracted out of the pressing chamber during the latter operation.

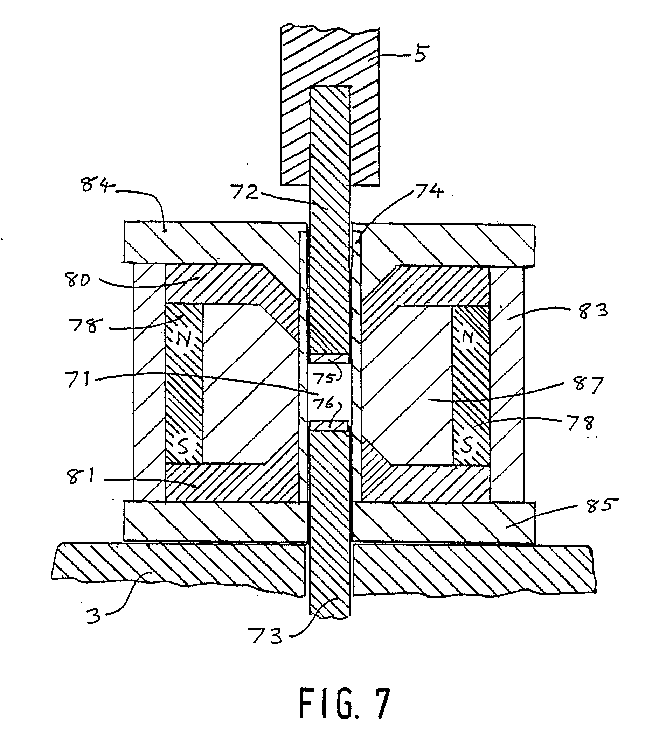

Figure 7 illustrates diagrammatically a form of apparatus in accordance with the invention for pressing an Nd-Fe-B magnet body prior to sintering, in which an alignment magnetic field is provided which is parallel to the pressing direction. A pressing chamber 71 is formed between the end faces of an upper punch 72 and a lower punch 73 and within a non-magnetic cylindrical wall liner 74, suitably of tungsten carbide e.g "STELLITE". The upper and lower punches 72, 73 are ferromagnetic, suitably of mild steel with their end faces provided with non-ferromagnetic end caps 75, 76, suitably of tungsten carbide. A longitudinal magnetic alignment field is generated in the pressing chamber 71 by a high-energy permanent magnet insert 78 formed by an assembly of Nd-Fe-B magnets or by an annular Nd-Fe-B magnet, and is applied to the pressing chamber 71 via a magnetic circuit formed by ferromagnetic members 80, 81, suitably of soft iron or mild steel and the corresponding upper and lower punches 72, 73. The pressing chamber and the associated magnetic circuit are contained and located within a non-ferromagnetic casing formed by a cylindrical outer wall 83 and upper and lower end walls 84, 85, suitably formed from stainless steel, tungsten carbide e.g. "STELLITE" or brass, and the inner region 87 can be filled with a suitable non-ferromagnetic support medium, suitably brass, stainless steel, tungsten carbide or a suitable curable resin. The casing is placed on the stationary platten 3 of a double acting press (not shown), and the press is operated in a manner similar to the other embodiments herein described.

The press of Figure 7 can be employed to form magnet bodies of any desired cross section for example circular or rectangular. The magnetic circuit elements 80 and 81 are tapered towards the pressing chamber 71 to render the longitudinal field more uniform. The upper central portion of the upper magnetic circuit element 80 is also tapered downwards in the vicinity of the central passage into the chamber 71 so that when the upper punch 72 is withdrawn, comminuted Nd-Fe-B powder can be readily loaded into the chamber 71 and the upper punch 72 re-introduced without the difficulty mentioned above of powder being attracted out of the chamber 71. After pressing, the magnet body is removed as in the other embodiments, by raising the lower punch.

From reading the present disclosure, other modifications will be apparent to persons skilled in the art. Such modifications may involve other features which are already known in methods and apparatus for the manufacture of rare earth transition metal alloy magnets and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

1. A method of manufacturing a magnet from a magnetic material the main phase of which comprises an intermetallic compound of the rare earth transition metal type which also includes boron, comprising the steps of:-

(a) forming an alloy of the constituent rare earth and transition metals with the addition of boron,

(b) comminuting the alloy to an average particle size in the range 0.3 to 80um and preferably less than about 10um,

(c) forming a magnet body by pressing the resulting powder in a pressing tool while the powder is situated in a magnetic aligning field,

(d) sintering the magnet body at a temperature in the range of about 800 to 1200 degrees C, followed by slow cooling, and

(e) after, if necessary, machining to shape, magnetising the magnet body, characterised in that in step (c) the magnetic alignment field is provided by a magnetic circuit whose magnetomotive force is generated by permanent magnet means including at least one high energy permanent magnet.

2. A method as claimed in Claim 1 characterised in that the intermetallic compound is an NdFeB alloy.

3. A method as claimed in Claim 1 or claim 2, characterised in that the intermetallic compound is such that at least 90% of the ultimate saturation remanence can be achieved with an aligning field of less than 400kA/m.

4. A method as claimed in any one of the preceding claims, characterised in that the alignment field is provided by at least one high energy permanent magnet, characterised by a flux $Bd$ of at least 300mT at the point on its demagnetisation curve representing the maximum value $(BH)_{max}$ for the product of the magnetic flux B in the magnet and the demagnetising field strength H.

5. A method as claimed in Claim 4, characterised in that the alignment field is provided by at least one high energy permanent magnet, characterised by a value for the product $(BH)_{max}$ of not less than 32kJ/m3.

6. A method as claimed in Claim 4, characterised in that the alignment field is provided by at least one high energy permanent magnet characterised by a value for the product $(BH)_{max}$ of not less than 80kJ/m3.

7. A method as claimed in Claim 6, characterised in that the alignment field is provided by an NdFeB permanent magnet.

8. A method as claimed in any one of the preceding claims, characterised in that the magnetic alignment field is directed through the magnet body parallel to the direction of the compression force.

9. A method as claimed in any one of the preceding claims and in which the magnet to be manufactured is a multipolar magnet, characterised in that the alignment magnetic circuit includes a plurality of permanent magnets arranged to direct a magnetic alignment field having a succession of adjacent regions of alternate oposite field directions into the magnet body to form the basis for a subsequent multipolar pattern of magnetisation after sintering.

10. Apparatus arranged to carry out the method claimed in any one of the preceding claims, including a pressing tool having a pressing chamber in which the alloy powder is pressed to form the magnet body, and magnetic circuit means for applying an aligning magnetic field to the alloy powder while it is being pressed, characterised in that the source of magnetomotive force employed in the magnetic circuit means to generate the aligning magnetic field comprises permanent magnet means including at least one high energy permanent magnet.

11. Apparatus as claimed in Claim 10, characterised in that the or each said high energy permanent magnet is characterised by a flux $Bd$ of at least 300mT at the point on its demagnetisation curve representing the maximum value $(BH)_{max}$ for the product of the magnetic flux B and the demagnetising field strength H.

12. Apparatus as claimed in Claim 10 or Claim 11, characterised in that the or each said high energy permanent magnet is characterised by a value for the product $(BH)_{max}$ of not less than 32kJ/m3.

13. Apparatus as claimed in Claim 10 or Claim 11, characterised in that the or each said high energy permanent magnet is characterised by a value for the product $(BH)_{max}$ of not less than 80kJ/m3.

14. Apparatus as claimed in Claim 13, characterised in that said high energy permanent magnet is an NdFeB permanent magnet.

15. Apparatus as claimed in any one of Claims 10 to 14 arranged to carry out the method of Claim 9, characterised in that the magnetic circuit means includes a plurality of said high energy magnets and associated pole pieces the latter being disposed in a succession adjacent a wall of the pressing chamber formed of non-magnetic material, so that corresponding successive alternately polarised regions of aligning field are provided in a charge of said allow powder present in the pressing chamber.

16. A permanent magnet formed from a magnetic material the main phase of which comprises an intermetallic compound of the rare earth transition metal type which also includes boron, and manufactured by the method claimed in any one of Claims 1 to 9.

17. A permanent magnet formed from an alloy containing a major hard magnetic phase comprising $Nd_2Fe_{12}B$, and manufactured by apparatus as claimed in any one of Claims 10 to 15.

18. A permanent magnet as claimed in Claim 17, and formed from an alloy substantially of the form $Nd_{15}Fe_{77}B_8$.

19. A multipolar permanent magnet comprising a permanent magnet as claimed in any one of Claims 16 to 18 manufactured by the method claimed in Claim 9.

20. A stepping motor including a rotor formed by a multipolar permanent magnet as claimed in Claim 19.

## Fig.1.

## Fig.2.

Fig.3.

0 265 016

2 - V - PHB 33305

# Fig.4.

5

36

32

35

V

S    N         N    S

34

3

31  37  33

# Fig.5.

32                    31

N

S

IV              S    N    N    S              IV

S

35

N                    3

33    34

FIG.6

FIG. 7